# EUROPÄISCHE PATENTSCHRIFT

(11) **EP 1 725 345 B1**
(45) Veröffentlichungstag und Bekanntmachung des Hinweises auf die Patenterteilung: **20.05.2009**
(21) Anmeldenummer: 05715523.6
(22) Anmeldetag: 25.02.2005
(51) Int. Cl.: B09B 3/00

(54) **VERWENDUNG VON FLÜSSIGKRISTALL-DISPLAYS SOWIE VERFAHREN ZU DEREN VERWERTUNG**
USE OF LIQUID CRYSTAL DISPLAYS AND METHOD FOR THE USE THEREOF
UTILISATION D'ECRANS A CRISTAUX LIQUIDES ET PROCEDE DE RECYCLAGE DE CEUX-CI

(30) Priorität: 05.03.2004 DE 102004011389; 27.04.2004 DE 102004020739; 17.06.2004 DE 102004029136
(43) Veröffentlichungstag der Anmeldung: 29.11.2006
(73) Patentinhaber: Merck Patent GmbH, 64293 Darmstadt (DE)
(72) Erfinder: ROLAND, Martin, 69469 Weinheim (DE)
(86) Internationale Anmeldenummer: PCT/EP2005/001971
(87) Internationale Veröffentlichungsnummer: WO 2005/084836

(56) Entgegenhaltungen:
- JP-A- 2000 084 531
- JP-A- 2001 198 565
- JP-A- 2002 346 505
- MARTIN R. ET AL.: "Verwertungsverfahren für LC-Displays" INTERNET ARTICLE, [Online] 12. Mai 2004 (2004-05-12), XP002331049 BERLIN Gefunden im Internet: URL:http://www.displayforum.de/download/na chhaltigkeit/06_Martin_Verwertungsverfahre n_LCDs.pdf> [gefunden am 2005-06-08]

## Beschreibung

Die vorliegende Erfindung betrifft die Verwendung von FlüssigkristallDisplays (LCD's = Liquid Crystal Displays) sowie Verfahren zu deren Verwertung, wiezumBeispiel in JP2001 / 198 565 beschrieben.

Die Anzahl der hergestellten LCD's sowie die mittlere Display-Fläche pro Display nimmt seit Jahren kontinuierlich zu. Da LCD's seit kurzem auch in TV-Geräten eingesetzt werden, ist auch in den kommenden Jahren mit deutlichen Wachstumsraten zu rechnen.

Obwohl es sich bei den wichtigsten LCD-Anwendungen, wie z.B. in Notebooks, Bildschirmen und TV-Geräten, um langlebige Produkte handelt, spielt die Entsorgung beziehungsweise die Verwertung eine immer wichtigere Rolle. Die in der Vergangenheit übliche Beseitigung durch Deponierung der Elektronik-Bauteile wird zunehmend durch Verwertungsverfahren ersetzt. Dies insbesondere auch im Hinblick auf die EU-Direktive 2002/96/EC betreffend "Waste Electrical and Electronic Equipment" ("WEEE"), wonach LCD's ausgebaut und entsorgt bzw. verwertet werden müssen.

Für die Verwertung bestehen dabei drei unterschiedliche Alternativen:
1. Das LCD wird aufgearbeitet und die Einzelkomponenten werden für das Originalprodukt wiederverwertet (z.B. Wiederaufarbeitung der Flüssigkristalle bzw. des Glases und deren Verwendung zur Herstellung von neuen LCD's).
2. Das LCD wird aufgearbeitet und die Einzelkomponenten finden in anderen Industrien oder für andere Produkte Verwendung.
3. Einzelne Bauteile, vorzugsweise ausgebaute Bauteile, der LCD's werden energetisch verwertet. In diesem Fall dient beispielsweise die Verbrennung der Kunststoffe der Energiegewinnung.

Die Verwertung von LCD-Glas zur Herstellung von neuen LCD's wird beispielsweise in der JP 2001/305501 A, der JP 2001/305502 A, der JP 2000/024613 A und der JP 2001/337305 A beschrieben. Nachteilig an dieser Art der Verwertung ist, dass das Glas immer OberflächenVerunreinigungen enthält und zusätzlich noch sortenrein gesammelt werden muß, was sowohl mit einem hohen technischen als auch mit einem hohen finanziellen Aufwand verbunden ist, da für unterschiedliche Anwendungen generell auch unterschiedliche Gläser eingesetzt werden. So werden beispielsweise für STN (Super Twisted Nematic)-LCD's im allgemeinen Natron-Kalk-Gläser eingesetzt, die im allgemeinen im Bereich von 1000°C schmelzen, während für TFT (Thin Film Transistor)-LCD's im allgemeinen Borosilikat-Gläser Verwendung finden, die im allgemeinen im Bereich von 1300°C schmelzen.

Ein spezielles Verfahren zur Entsorgung von LCD's betreibt die Berliner Firma "VICOR" in einer Pilotanlage, bei dem die Displays manuell von Gehäuse- und Elektronikteilen sowie den Polarisationsfolien getrennt und anschließend auf eine Größe von etwa 1 cm geschreddert werden (EDV, Elektronikschrott, Abfallwirtschaft 1993, S. 231-241). In einem Ofen werden dann die Flüssigkristalle in einer Stickstoff-Argon-Atmosphäre bei maximal 400°C und Normaldruck abdestilliert. Nach deren Kondensation in einer Kältefalle, gelangen sie zur Endlagerung in eine Untertage-Deponie. Die Ofentemperatur darf bei der Behandlung 600°C nicht überschreiten, da sonst aufgrund der Molekülstruktur die Gefahr der Dioxinbildung besteht. Die anderen anfallenden Materialfraktionen Glas, Kunststoff und Leiterplatten sowie Bauelemente werden über übliche Recyclingwege weiterverarbeitet. Nachteilig an diesem Verfahren ist, dass die Abtrennung der Flüssigkristalle, die zum einen nur einen sehr geringen Gewichtsanteil am gesamten Display ausmachen (etwa 1 kg Flüssigkristalle pro Tonne Displays) und zum anderen noch ein Gemisch aus einer Vielzahl von unterschiedlichen Einzelsubstanzen darstellen, sowohl technisch als auch finanziell sehr aufwändig ist, zumal die Flüssigkristalle anschließend deponiert werden. Eine Verwendung der zurückgewonnenen Flüssigkristalle in neuen LCD's ist nach heutigem Stand der Technik unwirtschaftlich. Das trifft auch für ein weiteres Verfahren zur Extraktion von Flüssigkristallen mit Lösungsmitteln zu, das in der JP 2002/126688 A beschrieben wird.

Die Kunststoffe, wie beispielsweise Gehäuseteile aber auch Polarisationsfolien und andere Folien, werden im allgemeinen abgetrennt und entweder energetisch verwertet oder finden Verwendung für andere Produkte. Das thermische Recycling solcher Kunststoffe wird z.B. in der JP 2002/159955 A beschrieben.

Auch die Verwendung der Einzelkomponenten für andere Produkte ist bekannt. So benutzt die "Straßburger Aufbereitungsgesellschaft" in Hockenheim (SAG) ein Verfahren um LCD's zu Schaumglas zu blähen (Diplom-Arbeit: "Recyclingverfahren für Flüssigkristalldisplays", Prof. Dr. Paffrath, Prof. Dr. Schön, Dipl.lng. Scala, TU-Darmstadt, 1997-98). Die verwendeten Anzeigen stammen dabei hauptsächlich vom Ausschuß aus der Produktion. Sie werden inklusiv der LC-Flüssigkeit mit Flachglas und Geräteglas vermischt, geschreddert, auf eine Korngröße von 40 µm staubfein gemahlen und mit einem Blähmittel vermengt. Anschließend werden bei 800 bis 850°C Schaumglaskügelchen von etwa 5 bis 15 mm Durchmesser gebläht. Das fertige Material hat Ähnlichkeit mit dem bekannten Blähton aus Hydrokulturen und ist verwendbar als Leichtzuschlagsstoff, als Füllstoff, als Wärmedämmmaterial, als Träger-Granulat oder als Absorptionsmaterial in der Bauindustrie, im Garten- und Landschaftsbau sowie in der Abwassertechnik.

Weitere Verfahren zur Entfernung der Polarisationsfolie durch mechanische Entfernung, Verbrennung oder Vergasung, mit anschließender Zerkleinerung der Gläser und deren Verwendung als Glasersatz werden in der JP 2001/296508 A und der JP 2001/296509 A beschrieben. Der Nachteil dieser Verfahren liegt darin, dass die daraus erhaltenen Gläser stark verunreinigt sind und in der Zusammensetzung stark differieren. Deshalb sind sie nur für minderwertige Anwendungen einsetzbar.

So wird in der JP 2000/084531 A ein Verfahren zur Verwertung von LCD's beschrieben, bei dem die LCD's zunächst zerkleinert werden, und zwar auf Teilchengrößen von weniger als 10 mm. Anschließend werden die derart zerkleinerten Teilchen bei 1200°C in Schmelzöfen zur Entfernung von Eisen eingesetzt. Nachteilig an diesem Verfahren ist insbesondere die aufwändige Zerkleinerung der LCD's auf Teilchengrößen von weniger als 10 mm sowie der eingeschränkte Einsatz auf die Entfernung von Eisen.

Darüber hinaus nimmt der Energieverbrauch kontinuierlich zu und es werden weltweit große Anstrengungen unternommen, Energie einzusparen. Insbesondere bei der industriellen Produktion ist man bemüht durch Verfahrensvereinfachungen, Wärmerückgewinnungen und/oder durch den Ersatz von Rohstoffen insbesondere die Kosten und/oder den Energieverbrauch zu reduzieren.

Ausgehend von dem bekannten Stand der Technik war es daher eine der Aufgaben der vorliegenden Erfindung nach wirtschaftlichen Verfahren zur Verwertung von LCD's zu suchen, die nicht die aus dem Stand der Technik bekannten Nachteile aufweisen. Insbesondere sollte die aufwändige Abtrennung der Flüssigkristalle und/oder der Polarisationsfolien sowie die aufwändige Sortierung der Displays nach unterschiedlichen Glassorten, unter Berücksichtigung der Energieeffzienz des Verfahrens, vermieden werden. Eine weitere Aufgabe der vorliegenden Erfindung war es, neue Verwendungsmöglichkeiten für LCD's bereitzustellen.

Überraschenderweise wurde gefunden, dass es möglich ist, LCD's in einem einfachen und zudem wirtschaftlichen Verfahren stofflich zu verwerten.

Gegenstand der vorliegenden Erfindung ist somit ein Verfahren zur stofflichen Verwertung von LCD's, das dadurch gekennzeichnet ist, dass man die LCD's mit einer Zusammensetzung, die ein Gemisch aus edlen und unedlen Metallen enthält,
- mischt,
- die Mischung aufschmilzt,
- die Schmelze abkühlt,
- die abgekühlte Schmelze bricht und
- den Teil der abgekühlten Schmelze, der im wesentlichen die edlen Metalle enthält, von dem restlichen Teil der abgekühlten Schmelze, der die unedlen Metalle enthält, abtrennt.

Im allgemeinen werden die LCD's dabei in einem Temperaturbereich von 900 bis 1700°C, vorzugsweise 1000 bis 1400°C und besonders bevorzugt 1200 bis 1400°C, thermisch behandelt. Die thermische Behandlung findet dabei insbesondere bei Temperaturen oberhalb von 1200°C statt, und damit bei Temperaturen, bei denen auch hochwertige Borosilikat-Gläser schmelzen.

Unter einem LCD wird in der vorliegenden Anmeldung ein Display verstanden, das neben den zwei Glasplatten zumindest noch die zwischen den beiden Glasplatten angeordneten Materialien, wie z.B. Flüssigkristalle, transparente Folien und Klebstoffe, enthält, sowie mit dem Display verbundene Elektronik-Bauteile (z.B. Elektroden) enthalten kann. Die Kunststoff-Gehäuse, die Hintergrundbeleuchtungen sowie gegebenenfalls die Polarisatorfolien werden in der Regel vorher abgetrennt und separat verwertet. Sie können aber auch bei dem erfindungsgemäßen Verfahren direkt mitverwertet werden.

LCD's bestehen im wesentlichen aus 30 bis 99,8 Gew.-% Glas und 0 bis 60 Gew.-% Kunststofffolie, sowie 0,1 bis 20 Gew.-% an Elektronik und Flüssigkristallen.

Bei dem erfindungsgemäßen Verfahren werden als LCD's vorzugsweise gebrauchte LCD's sowie LCD's aus dem Ausschuß aus der Produktion eingesetzt.

Unter thermischer Behandlung wird in der vorliegenden Anmeldung die Behandlung von LCD's unter Energiezufuhr durch Energieträger, wie z.B. Gas, Kohle und Öl, und/oder unter Ausnutzung der in den LCD's vorhandenen Heizenergie verstanden. Die thermische Behandlung erfolgt dabei üblicherweise in thermischen Behandlungsanlagen, wie z.B. Kraftwerken, Vergasungsanlagen und Verbrennungsanlagen, vorzugsweise Verbrennungsanlagen, mit den dazu notwendigen Vorrichtungen, wie z.B. feststehenden Öfen, Schmelzöfen, Flammöfen oder Drehrohröfen.

In einer ersten bevorzugten Ausführungsform werden die LCD's unzerkleinert eingesetzt. Vorteilhaft an dieser Ausführungsform ist, dass auf die Zerkleinerung der LCD's verzichtet werden kann, die sowohl mit einem zusätzlichen technischen Aufwand als auch mit zusätzlichen Kosten verbunden ist. In einer zweiten bevorzugten Ausführungsform werden die LCD's zerkleinert. Die Art und Größe der Zerkleinerung ist dabei jedoch unkritisch. So können die LCD's entweder gebrochen, geschreddert oder gemahlen werden. In Abhängigkeit von der Art der Zerkleinerung liegt die mittlere Größe der Bruchstücke dabei im Bereich von Dezimetern (beim Brechen), im Bereich von Zentimetern (beim Schredderen) und im Bereich von Millimetern (beim Mahlen).

Vorteilhaft an dem erfindungsgemäßen Verfahren ist, dass die aufwändige Abtrennung der Flüssigkristalle überflüssig ist und dass gleichzeitig die Gefahr der Bildung von giftigen Produkten, wie z.B. Dioxin, vermieden wird, da bei den hohen Temperaturen des erfindungsgemäßen Verfahrens sämtliche organischen Produkte zerstört werden.

Ein weiterer Vorteil des erfindungsgemäßen Verfahrens ist, dass das Ausgangsmaterial in gemahlener, geschredderter, gebrochener und/oder unzerkleinerter Form eingesetzt werden kann.

Darüber hinaus handelt es sich bei dem erfindungsgemäßen Verfahren um ein wirtschaftliches Verfahren, bei dem zudem noch eine stoffliche sowie gegebenenfalls zusätzlich noch eine zumindest teilweise thermische Verwertung der LCD's stattfindet.

Die erfindungsgemäße stoffliche sowie die gegebenenfalls zusätzliche, zumindest teilweise thermische Verwertung kann dabei in der erfindungsgemäßen Ausführungsform durchgeführt werden.

Erfindungsgemäß werden die LCD's mit anderen metallhaltigen Produkten, wie z.B. metallhaltigen Schlämmen und/oder Katalysatoren, vermischt und in einem Temperaturbereich von 1200 bis 1400°C, vorzugsweise 1250 bis 1350°C, thermisch behandelt.

Der Anteil an LCD's im Gesamtgemisch liegt dabei vorzugsweise im Bereich von 5 bis 50 Gew.%.

Erfindungsgemäß werden die LCD's eingesetzt, um die in den metallhaltigen Produkten enthaltenen unedlen Metalle, wie z.B. Eisen, Blei, Zink und Zinn, zu binden und von den edlen Metallen abzutrennen. Zu den edlen Metallen zählen dabei in der vorliegenden Anmeldung sowohl die Edelmetalle im engeren Sinn, wie z.B. Gold, Silber, Platin, Quecksilber, Rhenium, Ruthenium, Rhodium, Palladium, Osmium und Iridium, als auch die Halbedelmetalle Nickel, Kupfer und Kobalt. Das Gemisch wird vorzugsweise in Schmelztiegeln, Schmelzöfen oder Drehrohröfen aufgeschmolzen und danach in Tiegel gegossen. Nach dem Abkühlen wird die Schmelze gebrochen. Der untere Teil ist metallhaltig und enthält im wesentlichen die edlen Metalle, wohingegen der obere Teil die Schlacke mit den unedlen Metallen enthält. Der Teil, der die edlen Metalle enthält wird der Metallrückgewinnung zugeführt und die Schlacke, die die unedlen Metalle enthält, findet beispielsweise Verwendung im Straßenbau.

Vorteilhaft an dieser Ausführungsform ist seine Wirtschaftlichkeit, denn die LCD's ersetzen bei dieser Ausführungsform zumindest einen Teil des üblicherweise eingesetzten Schmelzsandes, der bei diesem Verfahren notwendigerweise zugesetzt werden muß, um die unedlen Metalle zu binden. Darüber hinaus können bei dieser Ausführungsform zusätzlich auch zumindest ein Teil der, vorzugsweise alle, Elektronik-Bauteile der LCD's mitverwertet werden, da wie oben dargelegt, eine Abtrennung und Rückgewinnung zumindest der Edelmetalle stattfindet.

Ein weiterer signifikanter Vorteil ist der hohe Energie-Eintrag durch die in den LCD's enthaltenen Kunststofffolien. Dies soll durch die folgende Berechnung belegt werden:

Typischerweise setzt sich 1 Tonne LCD's zusammen aus:

| | |
|---|---|
| 830 kg Glas | (83 Gew.-%) |
| 149 kg Kunststofffolie | (14,9 Gew.-%) |
| 20 kg Elektronik | (2 Gew.-%) und |
| 1 kg Flüssigkristalle | (0,1 Gew.-%). |

Daraus ergibt sich die folgende Energiebetrachtung, bei der lediglich der Glas- und Kunststoffanteil berücksichtigt wird:

So beträgt beispielsweise der Heizwert für PE-Folie 46.000 kJ/kg. Bei 150 kg Kunststofffolie ergibt sich daraus ein Heizwert von 6.900.000 kJ. Der Energiebedarf um 1 kg Altglas zu schmelzen liegt im Bereich von 3.000 bis 6.500 kJ. Zur Schmelze von 830 kg Glas sind demnach 2.490.000 bis 5.395.000 kJ erforderlich.

Wie diese beispielhafte Energiebetrachtung zeigt, übersteigt der Heizwert der Kunststofffolien den Energiebedarf zum Aufschmelzen des Glases, d.h. dass schon ein Kunststoffanteil von 15 Gew.-% ausreicht, um das LCD-Glas aufzuschmelzen. Folglich ist theoretisch kein zusätzlicher Energiebedarf notwendig. Der Energieeintrag erhöht sich zudem noch mit steigendem Kunststoffanteil, vorteilhaft durch Eintrag auch der Kunststoffgehäuse.

Für das oben beschriebene erfindungsgemäße Verfahren zur Gewinnung von edlen Metallen ergibt sich somit durch die Verwendung von LCD's als Roh- und/oder Zuschlagsstoff zusätzlich noch eine Reduzierung der notwendigen Energie, d.h. eine Energieeinsparung im Vergleich zum Einsatz von Schmelzsand.

Ein weiterer Vorteil der erfindungsgemäßen Ausführungsform ist die Tatsache, dass die in den LCD's enthaltenen Kunststofffolien als Reduktionsmittel eingesetzt werden können, um die metallhaltigen Produkte zu reduzieren. Bei der reduktiven Schmelze von metallhaltigen Erzen oder Produkten zur Gewinnung von Rohmetallen werden im allgemeinen kohlenstoffhaltige Produkte, wie zum Beispiel Kohle, zugesetzt. Bei den hohen Schmelztemperaturen würden nämlich ohne den Zusatz von Reduktionsmitteln die Metalle oxidiert und müssten in einem zusätzlichen Produktionsschritt erst wieder zu Metallen reduziert werden. Durch die Verwendung der in den LCD's enthaltenen Kunststofffolien, die Kohlenstoff aufweisen, kann damit zumindest ein Teil, vorzugsweise alle, der üblicherweise bei diesem Verfahren als Reduktionsmittel zugesetzten, kohlenstoffhaltigen Produkte ersetzt bzw. eingespart werden.

Gegenstand der vorliegenden Erfindung ist somit auch die Verwendung von LCD's als Ersatz für Schmelzsände und/oder kohlenstoffhaltige Produkte bei der Gewinnung von edlen Metallen aus Zusammensetzungen, die ein Gemisch aus edlen und unedlen Metallen enthalten.

Bei der erfindungsgemäßen Verwendung werden als LCD's vorzugsweise gebrauchte LCD's sowie LCD's aus dem Ausschuß aus der Produktion eingesetzt.

Ferner bevorzugt ist die Verwendung der LCD's bei der Metallgewinnung als Energielieferant.

Bei den Zusammensetzungen, die ein Gemisch aud unedlen und edlen Metallen enthalten, kann es sich sowohl um in der Natur vorkommende Produkte, wie z.B. Erze, handeln, als auch um industrielle Produkte, wie z.B, Katalysatoren, Elektro- bzw. Elektronikschrott, metallhaltige Schlämme sowie andere Zusammensetzungen, die ein Gemisch aus edlen und unedlen Metallen enthalten. Insbesondere finden die LCD's dabei Verwendung als Roh- und/oder Zuschlagsstoffe, der zumindest teilweise anstelle des üblicherweise eingesetzten Schmelzsandes und/oder der eingesetzten kohlenstoffhaltigen Produkte eingesetzt wird.

Die vorliegende Erfindung wird im folgenden anhand eines Ausführungsbeispiels näher beschrieben, ohne dadurch jedoch beschränkt zu werden.

### Beispiel 1 (Metallurgie)

Die Versuche werden in einem in der Waage liegenden mit Gas beheizbaren Ofen mit einem Durchmesser von ca. 3,5 m und einer Länge von 4 m durchgeführt.

Das bei diesen Versuchen eingesetzte LCD-Gemisch besteht dabei aus etwa 40% TFT-LCD's und etwa 60% STN-LCD's. Die LCD's liegen meistens in unzerbrochener Form oder auch teilweise - durch Umfüll- bzw. Umschüttvorgänge bedingt - in zerbrochener Form vor, d.h. in Größen von 10 bis 50 cm Durchmesser. Teilweise ist noch die Elektronik an den LCD's vorhanden. Die LCD's stammen dabei im wesentlichen von Elektro-Recycling-Untemehmen, die die LCD's ausgebaut, gesammelt und gelagert haben.

Mit einem Schaufellader werden die Metallabfälle, das LCD-Gemisch, der Schmelzsand sowie die Zuschlagsstoffe inklusiv Kohle in einen ca. 10^{m3} fassenden Mischer mit Innenschaufeln eingebracht und langsam gemischt. Die genauen Zusammensetzungen werden in der Tabelle 1 beschrieben. Bei diesem Mischvorgang zerbrechen die LCD's zumindest teilweise, so dass die Hauptmenge der LCD's nach dem Mischen in der Größe von 3 bis 30 cm vorliegen. Danach wird das Gemisch über ein Förderband kontinuierlich in den auf ca. 500°C vorgeheizten Ofen eingebracht und über mehrere Stunden auf ca. 1350°C hochgeheizt und aufgeschmolzen. Die Schmelze wird dann in ein Stahlgefäß oder ausgemauerten Trog abgelassen. Nach dem Erkalten kann die Metallfraktion mit den edlen Metallen aus den Metallabfällen und den in der Elektronik enthaltenen Kupferanteilen durch Zerschlagen leicht von der Schlacke, die den Glasanteil der LCD's, den zugesetzten Schmelzsand und die Zuschlagsstoffe enthält, abgetrennt werden.

Die erhaltene Schlacke entspricht allen Ansprüchen des Straßenbaues.

Die folgenden Versuche werden durchgeführt:

**Tabelle 1**

| **Versuch** | **Metallabfall** | **LCD's** | **Schmelzsand** | **Zuschlagsstoffe** | **Gesamtmenge** |
|---|---|---|---|---|---|
| **Nr.** | **[kg]** | **[kg]** | **[kg]** | **[kg]** | **[kg]** |
| **1** | 3000 | 300 | 850 | 650 | 4800 |
| **2** | 3000 | 600 | 600 | 600 | 4800 |
| **3** | 3000 | 900 | 350 | 550 | 4800 |
| **4** | 3000 | 1200 | 100 | 500 | 4800 |
| **5** | 3000 | 1350 | 0 | 450 | 4800 |

### Versuch 6

4,8 t der Mischung der Zusammensetzung des Versuchs 2 werden als Mischung vollständig in den erkalteten Ofen eingebracht und dann langsam auf 1300°C hochgeheizt. Die teilweise entstehende Rußbildung wird durch Zusatz von Sauerstoff in das Heizgas direkt mit verbrannt. In bezug auf die Metallfraktion und die Schlackenbildung wird kein Unterschied im Vergleich zu den Versuchen 1 bis 5 festgestellt.

### Versuch 7

600 kg obiger LCD's, 3000 kg Metallabfälle, 600 kg Schmelzsand und 600 kg Zusatzstoffe werden als Einzelkomponenten vollständig in den erkalteten Ofen eingebracht und dann langsam auf 1300°C hochgeheizt. Durch das Einbringen sind nur die größeren LCD's zerbrochen, während die kleineren nur unwesentlich zerbrochen werden. Die teilweise entstehende Rußbildung wird durch Zusatz von Sauerstoff in das Heizgas direkt mit verbrannt. In bezug auf die Metallfraktion und die Schlackenbildung wird kein Unterschied im Vergleich zu den Versuchen 1 bis 5 festgestellt.

### Versuch 8

4,8 t der Mischung der Zusammensetzung des Versuchs 2 werden als Mischung vollständig in den erkalteten Ofen eingebracht und dann langsam auf 1400°C hochgeheizt. Die teilweise entstehende Rußbildung wird durch Zusatz von Sauerstoff in das Heizgas direkt mit verbrannt. In bezug auf die Metallfraktion wird kein Unterschied festgestellt, die Schlackenbildung wird subjektiv als etwas glasartiger im Vergleich zu den Versuchen 1 bis 5 beurteilt.

## Patentansprüche

1. Verfahren zur stofflichen Verwertung von LCD's, **dadurch gekennzeichnet, dass** man die LCC3's mit einer Zusammensetzung, die ein Gemisch aus edlen und unedlen Metallen enthält,
- mischt,
- die Mischung aufschmilzt,
- die Schmelze abkühlt,
- die abgekühlte Schmelze bricht und
- den Teil der abgekühlten Schmelze, der im wesentlichen die edlen Metalle enthält, von dem restlichen Teil der abgekühlten Schmelze, der die unedlen Metalle enthält, abtrennt.

2. Verfahren gemäß Anspruch 1, **dadurch gekennzeichnet, dass** man die LCD haltige Mischung in einem Temperaturbereich von 900 bis 1700°C aufschmilzt.

3. Verfahren gemäß Anspruch 1 oder 2, **dadurch gekennzeichnet, dass** die LCD haltige Mischung in einem Temperaturbereich von 1200 bis 1400°C aufschmilzt.

4. Verfahren gemäß Anspruch 1, **dadurch gekennzeichnet, dass** die LCD's zumindest einen Teil der Elektronik-Bauteile enthalten.

5. Verfahren gemäß mindestens einem der Ansprüche 1 bis 4, **dadurch gekennzeichnet, dass** die LCD's zumindest einen Teil des üblicherweise bei diesem Verfahren eingesetzten Schmelzsandes ersetzen.

6. Verfahren gemäß mindestens einem der Ansprüche 1 bis 5, **dadurch gekennzeichnet, dass** die in den LCD's enthaltenen Kunststofffolien als Reduktionsmittel eingesetzt werden, um die metallhaltigen Produkte zu reduzieren.

7. Verfahren gemäß mindestens einem der Ansprüche 1 bis 6, **dadurch gekennzeichnet, dass** die in den LCD's enthaltenen Kunststofffolien zumindest einen Teil der üblicherweise bei diesem Verfahren als Reduktionsmittel zugesetzten, kohlenstoffhaltigen Produkte ersetzen.

8. Verwendung von LCD's als Ersatz für Schmelzsände und/oder kohlenstoffhaltige Produkte bei der Gewinnung von edlen Metallen aus Zusammensetzungen, die ein Gemisch aus edlen und unedlen Metallen enthalten.

9. Verwendung gemäß Anspruch 8, **dadurch gekennzeichnet, dass** die LCD's als Energielieferant eingesetzt werden.

10. Verwendung von LCD's gemäß Anspruch 8 oder 9, **dadurch gekennzeichnet, dass** die LCD's bei der Gewinnung von edlen Metallen aus Erzen eingesetzt werden.

11. Verwendung von LCD's gemäß Anspruch 8 oder 9, **dadurch gekennzeichnet, dass** die LCD's bei der Gewinnung von edlen Metallen aus Katalysatoren, Elektro- bzw. Elektronikschrott und/oder metallhaltigen Schlämmen eingesetzt werden.

## Claims

1. Process for the material recycling of LCDs, **characterised in that** the LCDs are
- mixed with a composition which comprises a mixture of noble and non-noble metals,
- the mixture is melted,
- the melt is cooled,
- the cooled melt is broken and
- the part of the cooled melt that essentially comprises the noble metals is separated off from the remaining part of the cooled melt, which comprises the non-noble metals.

2. Process according to Claim 1, **characterised in that** the LCD-containing mixture is melted in a temperature range from 900 to 1700°C.

3. Process according to Claim 1 or 2, **characterised in that** the LCD-containing mixture is melted in a temperature range from 1200 to 1400°C.

4. Process according to Claim 1, **characterised in that** the LCDs comprise at least part of the electronic components.

5. Process according to at least one of Claims 1 to 4, **characterised in that** the LCDs replace at least part of the foundry sand usually employed in this process.

6. Process according to at least one of Claims 1 to 5, **characterised in that** the plastic films present in the LCDs are employed as reducing agent in order to reduce the metal-containing products.

7. Process according to at least one of Claims 1 to 6, **characterised in that** the plastic films present in the LCDs replace at least part of the carbon-containing products usually added as reducing agent in this process.

8. Use of LCDs as substitute for foundry sands and/or carbon-containing products in the recovery of noble metals from compositions comprising a mixture of noble and non-noble metals.

9. Use according to Claim 8, **characterised in that** the LCDs are employed as energy supplier.

10. Use of LCDs according to Claim 8 or 9, **characterised in that** the LCDs are employed in the recovery of noble metals from ores.

11. Use of LCDs according to Claim 8 or 9, **characterised in that** the LCDs are employed in the recovery of noble metals from catalysts, electrical or electronic scrap and/or metal-containing sludges.

## Revendications

1. Procédé pour le recyclage de matériau de LCDs, **caractérisé en ce que** les LCDs sont
- mélangés avec une composition qui comprend un mélange de métaux nobles et non nobles,
- le mélange est fondu,
- le métal est refroidi,
- le métal refroidi est concassé et
- la partie du métal refroidi qui comprend essentiellement les métaux nobles est séparée de la partie restante du métal refroidi qui comprend les métaux non nobles.

2. Procédé selon la revendication 1, **caractérisé en ce que** le mélange contenant du LCD est fondu dans une plage de température de 900 à 1700°C.

3. Procédé selon la revendication 1 ou 2, **caractérisé en ce que** le mélange contenant du LCD est fondu dans une plage de température de 1200 to 1400°C.

4. Procédé selon la revendication 1, **caractérisé en ce que** les LCDs comprennent au moins une partie des composants électroniques.

5. Procédé selon au moins l'une des revendications 1 à 4, **caractérisé en ce que** les LCDs remplacent au moins une partie du sable de fonderie employé habituellement dans ce procédé.

6. Procédé selon au moins l'une des revendications 1 à 5, **caractérisé en ce que** les films plastiques présents dans les LCDs sont employés comme agent de réduction afin de réduire les produits contenant du métal.

7. Procédé selon au moins l'une des revendications 1 à 6, **caractérisé en ce que** les films plastiques présents dans les LCDs remplacent au moins une partie des produits contenant du carbone ajoutés habituellement comme agent de réduction dans ce procédé.

8. Utilisation de LCDs comme substituants à des sables de fonderie et/ou à des produits contenant du carbone dans la récupération de métaux nobles à partir de compositions comprenant un mélange de métaux nobles et non nobles.

9. Utilisation selon la revendication 8, **caractérisée en ce que** les LCDs sont employés comme fournisseur d'énergie.

10. Utilisation des LCDs selon la revendication 8 ou 9, **caractérisée en ce que** les LCDs sont employés dans la récupération de métaux nobles à partir de minerais.

11. Utilisation des LCDs selon la revendication 8 ou 9, **caractérisée en ce que** les LCDs sont employés dans la récupération de métaux nobles à partir de catalyseurs, de déchets électriques ou électroniques et/ou de boues contenant du métal.
